# EUROPÄISCHE PATENTSCHRIFT

(11) **EP 2 543 861 B1**
(45) Veröffentlichungstag und Bekanntmachung des Hinweises auf die Patenterteilung: **02.01.2019**
(21) Anmeldenummer: 12004903.6
(22) Anmeldetag: 30.06.2012
(51) Int. Cl.: F02K 1/08, F02K 1/82

(54) **Fluggasturbine mit variabler Nebenstromdüse**
Gas turbine engine with variable bypass nozzle
Moteur à turbine à gaz avec tuyère variable pour flux secondaire

(30) Priorität: 08.07.2011 DE 102011106959
(43) Veröffentlichungstag der Anmeldung: 09.01.2013
(73) Patentinhaber: Rolls-Royce Deutschland Ltd & Co KG, 15827 Blankenfelde-Mahlow (DE)
(72) Erfinder: Todorovic, Predrag, 10437 Berlin (DE); Trumper, Miles, 12307 Berlin (DE)
(74) Vertreter: Hoefer & Partner Patentanwälte mbB

(56) Entgegenhaltungen:
- EP-A2- 2 093 407
- DE-A1- 2 321 432
- JP-A- 2001 050 110
- US-A- 2 641 104
- US-A- 3 279 192
- US-A1- 2007 272 477

## Beschreibung

Die Erfindung bezieht sich auf eine Fluggasturbine mit einem Kerntriebwerk, welches von einem Nebenstromkanal umströmt wird.

Aus dem Stand der Technik ist es bekannt, einen Nebenstromkanal so auszubilden und zu dimensionieren, dass er am Ausströmbereich eine Düse bildet, um den zusätzlichen Schub des Nebenstromkanals effektiv nutzen zu können.

Bei der Entwicklung von modernen Fluggasturbinen-Triebwerke mit einem Fan, welcher über ein Getriebe angetrieben wird, ergibt sich die Notwendigkeit, die Nebenstromdüse variabel auszubilden, um das Wirkprinzip eines mit einem Getriebe versehenen Fans effektiv nutzen zu können. Die aus dem Stand der Technik bekannten Systeme sind meistens an der Abströmkante der Triebwerksverkleidung (nacelle) angeordnet. Dabei sind segmentierte Teile der Abströmkante (trailing edge) bekannt, welche sich durch Betätigungsvorrichtungen radial nach außen oder nach innen bewegen. Bei einer anderen Lösung bewegt sich die gesamte Abströmkante, welche als separater Ring ausgebildet ist, in Axialrichtung. Weiterhin sind Lösungen bekannt, bei welchen die innere Triebwerksstruktur, welche das Kerntriebwerk umgibt, veränderbar ausgebildet ist, beispielsweise durch bewegbare Segmente oder durch axial bewegbare Ausströmteile.

Zum Stand der Technik ist beispielsweise auf die US 2008/0166227 A1 zu verweisen. Ferner zeigen die US 2 641 104 A, die JP 2001 050110 A, die US 3 279 192 A, die EP 2 093 407 A2 und die DE 23 21 432 A1 eine Fluggasturbine gemäß dem Oberbegriff des Anspruchs 1. Ferner zeigt auch die US 2007/0272477 A1 eine Fluggasturbine mit einem Nebenstromkanal.

Insgesamt ergibt sich bei den aus dem Stand der Technik bekannten Lösungen der Nachteil, dass eine große Anzahl von Bauelementen erforderlich sind, dass die Betätigung komplex und aufwendig ist und dass die geringe Dicke der Abströmkante des Nebenstromgehäuses axial längere und schwerere Systeme erfordert. Weiterhin ergeben sich Probleme hinsichtlich der auftretenden Spalten, welche die Durchströmung des Nebenstromkanals stören sowie hinsichtlich der Alterung von
nicht-metallischen Materialien, welche für die Nebenstromdüsenverstellungen verwendet werden. Zusätzlich führen starke dreidimensionale Strömungseffekte im Nebenstromkanal zu Strömungsverlusten. Auch eine Reduzierung der zur Schalldämpfung zur Verfügung stehenden Fläche bringt Nachteile.

Der Erfindung liegt die Aufgabe zugrunde, eine Fluggasturbine mit einer variablen Nebenstromdüse zu schaffen, welche bei einfachem Aufbau und einfacher, kostengünstiger Herstellbarkeit die Nachteile des Standes der Technik vermeidet und einen hohen Wirkungsgrad aufweist.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit eine Fluggasturbine mit einem Kerntriebwerk geschaffen, welches von einem Nebenstromkanal umgeben ist. Der Nebenstromkanal wird radial außerhalb durch eine Nebenstromwandung umschlossen, und eine radial innere Wandung der Nebenstromwandung (nacelle) bildet mit einer radial äußeren Wandung der Verkleidung des Kerntriebwerks eine Nebenstromdüse (Fan-Düse). Erfindungsgemäß ist vorgesehen, dass die radial innere Wandung des Nebenstromkanals, welche Teil einer Verkleidung des Kerntriebwerks ist oder diese umfasst, ein sich in Umfangsrichtung der Innenwandung erstreckendes Verstellelement umfasst, welches radial nach außen und somit in den Nebenstromkanal verformbar ist.

Erfindungsgemäß ist somit eine Lösung geschaffen, bei welcher die Nebenstromwandung, die Abströmkante der Nebenstromwandung und die gesamte Triebwerksverkleidung (nacelle) nicht verstellbar ausgebildet sein müssen. Vielmehr ist das Verstellelement radial innenliegend in dem Nebenstromkanal angeordnet und kann somit einen geringeren Durchmesser aufweisen als die aus dem Stand der Technik bekannten Verstellmechanismen an der Abströmkante der Nebenstromverkleidung.

Erfindungsgemäß wird somit eine Lösung geschaffen, bei welcher eine verformbare oder biegbare Ausgestaltung des Verstellelements vorgesehen ist, welches an der Innenwandung des Nebenstromkanals angeordnet ist. Das erfindungsgemäße Verstellelement kann somit an der inneren Struktur der Verkleidung des Kerntriebwerks (inner fixed structure) angeordnet und von dort aus betätigt werden. Das erfindungsgemäße Verstellelement befindet sich somit am inneren Annulusbereich des Nebenstromkanals. Hierdurch ist es auf einfache und leicht überwachbare Art möglich, einen Teil der inneren Wandung des Nebenstromkanals zu verstellen, um auf diese Weise eine variable Nebenstromdüse zu schaffen.

Ferner ist vorgesehen, dass das Verstellelement an seinem stromauf angeordneten Bereich mit zumindest einer Lufteinlassöffnung versehen ist, durch welche Luft aus dem Nebenstromkanal in einen innenliegenden Ringraum des Verstellelements einleitbar ist. Hierdurch ergibt sich ein Balloneffekt, da diese einströmende Luft zu einem zusätzlichen "Aufblasen" des Verstellelements führt. Es ist somit ein geringerer Energieaufwand für die Betätigungsvorrichtung erforderlich, so dass diese klein dimensioniert ausgebildet werden kann. Weiterhin werden die auftretenden Belastungen gut und gleichmäßig auf die Struktur verteilt, wobei einzelne lokale Belastungen vermieden werden.

Erfindungsgemäß ist das Verstellelement elastisch ausgebildet, bevorzugterweise als separates, ringförmiges Bauelement. Es bildet somit ein dünnwandiges, im Wesentlichen zylindrisches Bauelement, welches aus Metall gefertigt werden und in einfacher Weise gewölbt werden kann. Diese zusätzliche Verstellung oder Wölbung kann erfindungsgemäß ohne großen Energieaufwand und in sehr leicht kontrollierter Weise erfolgen.

Bevorzugterweise ist das Verstellelement an seinem stromauf angeordneten Bereich in Axialrichtung verschiebbar. Dabei ist es insbesondere günstig, wenn an dem stromauf angeordneten Endbereich des Verstellelements ein starres Ringelement vorgesehen ist, welches mit einer Betätigungsvorrichtung gekoppelt und in Axialrichtung verschiebbar ist. Durch eine axiale Verschiebung in Richtung auf den Ausströmbereich der Gasturbine ergibt sich somit ein Aufwölben des Verstellelements. Hierdurch wird der Querschnitt der Nebenstromdüse variabel angepasst. Da das Aufwölben in einer vorbestimmbaren Oberflächenkontur erfolgt, ergibt sich ein optimierter Strömungsverlauf in dem Nebenstromkanal, welcher nicht durch Betätigungselemente, Anbauelemente oder Ähnliches gestört ist.

In einer besonders günstigen Ausgestaltung der Erfindung ist weiterhin vorgesehen, dass das Verstellelement mit einem Schalldämpfungselement oder einer Schalldämpfungsoberfläche versehen ist, so dass sich eine zusätzliche Schalldämpfung ergeben kann und/oder, so dass die vorhandenen Schalldämpfungsmaßnahmen nicht durch die erfindungsgemäße Nebenstromdüse beeinträchtigt werden. Es ergibt sich hierdurch eine weitere Geräuschreduzierung, insbesondere wegen der elastischen Verformung des Bauelements.

Weiterhin ist es besonders günstig, wenn die Luft aus dem Innenraum des Verstellelements als Kühlluft abgeführt werden kann, beispielsweise zur Kühlung des Turbinengehäuses der Fluggasturbine oder zur Steuerung des Schaufelspitzenspalts der Turbine. Hierdurch ist die gesamte Konstruktion radial näher an dem Turbinengehäuse angeordnet und braucht keine langen Einlaßkanäle.

Das erfindungsgemäße Verstellelement ist bevorzugterweise an seinem stromab angeordneten Bereich über eine elastische Flanschkonstruktion mit der Tragkonstruktion der Kerntriebwerksverkleidung oder dem Kerntriebwerksgehäuse verbunden. Dies kann durch eine Schraubverbindung realisiert sein. Der stromauf angeordnete Bereich, insbesondere das starre Ringelement, sind bevorzugterweise beispielsweise über Zuganker oder T-förmige Haken mit der Betätigungsvorrichtung gekoppelt. Hierdurch wird eine definierte Axialbewegung der Vorderkante des Verstellelements sichergestellt.

Da erfindungsgemäß die Wärmeisolierung durch die innere Tragstruktur oder das Gehäuse des Kerntriebwerks bereitgestellt wird, kann das erfindungsgemäße Verstellelement der erfindungsgemäßen variablen Nebenstromdüse aus kostengünstigem und leichtgewichtigem Material hergestellt werden. Weiterhin ist es möglich, das Verstellelement so zu dimensionieren und anzuordnen, dass es Montagebereiche, insbesondere verstellbare Spalte oder Ähnliches der inneren Tragstruktur des Nebenstromkanals abdeckt, so dass diese keine negative Beeinflussung der Durchströmung des Nebenstromkanals hervorrufen können.

Erfindungsgemäß ergibt sich somit eine kostengünstige und leicht gewichtige Gesamtkonstruktion, welche in ein Turbinengehäuse-Kühlsystem integriert werden kann. Es ergeben sich Möglichkeiten einer guten Geräuschdämpfung. Die glatten Ringlinien am Anströmbereich sowie am Abströmbereich des Verstellelementes führen auch bei einem reduzierten Querschnitt der Nebenstromdüse zu guten Strömungseigenschaften. Ein weiterer, wesentlicher Vorteil liegt darin, dass die erfindungsgemäße Konstruktion einfach herstellbar und montierbar sowie einfach zu warten ist. Dies insbesondere im Hinblick darauf, dass das Verstellelement aus einem metallischen Material gefertigt werden kann, welches hinsichtlich seiner Alterung elastischen Materialien überlegen ist.

Im Folgenden wird die Erfindung anhand eines Ausführungsbeispiels in Verbindung mit der Zeichnung beschrieben. Dabei zeigt:
- Fig. 1: eine schematische Darstellung eines Gasturbinentriebwerks gemäß der vorliegenden Erfindung,
- Fig. 2: eine vereinfachte Ansicht, ähnlich Fig. 1, mit Darstellung der Nebenstromdüse und des erfindungsgemäßen Verstellelements,
- Fig. 3: eine vergrößerte Darstellung des in Fig. 2 gezeigten Details im Normalzustand,
- Fig. 4: eine Ansicht, analog Fig. 3, im Zustand eines verringerten Düsenquerschnitts,
- Fig. 5: eine perspektivische Teil-Ansicht des erfindungsgemäßen Verstellelements,
- Fig. 6: eine vereinfachte Darstellung der Verformung des erfindungsgemäßen Verstellelements,
- Fig. 7: eine Darstellung des Anströmbereichs des erfindungsgemäßen Verstellelements, und
- Fig. 8: eine vergrößerte Darstellung des Abströmbereichs des erfindungsgemäßen Verstellelements.

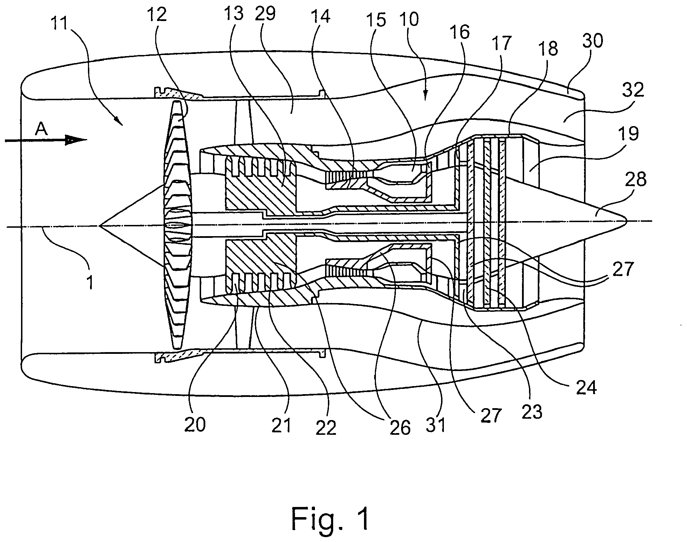

Das Gasturbinentriebwerk 10 gemäß Fig. 1 ist ein Beispiel einer Turbomaschine, bei der die Erfindung Anwendung finden kann. Aus dem Folgenden wird jedoch klar, dass die Erfindung auch bei anderen Turbomaschinen verwendet werden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Zwischendruckkompressor 13, einen Hochdruckkompressor 14, Brennkammern 15, eine Hochdruckturbine 16, eine Zwischendruckturbine 17 und eine Niederdruckturbine 18 sowie eine Abgasdüse 19, die sämtlich um eine zentrale Triebwerksachse 1 angeordnet sind.

Der Zwischendruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Triebwerksgehäuse 21 in einen ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Zwischendruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenschaufeln 24, die nach außen von einer drehbaren Nabe 27 vorstehen. Die Kompressortrommel oder Kompressorscheibe 26 und die darauf angeordneten Schaufeln 22, sowie die Turbinenrotornabe 27 und die darauf angeordneten Turbinenlaufschaufeln 24, drehen sich im Betrieb um die Triebwerksachse 1. Das Bezugszeichen 28 zeigt einen Auslasskonus.

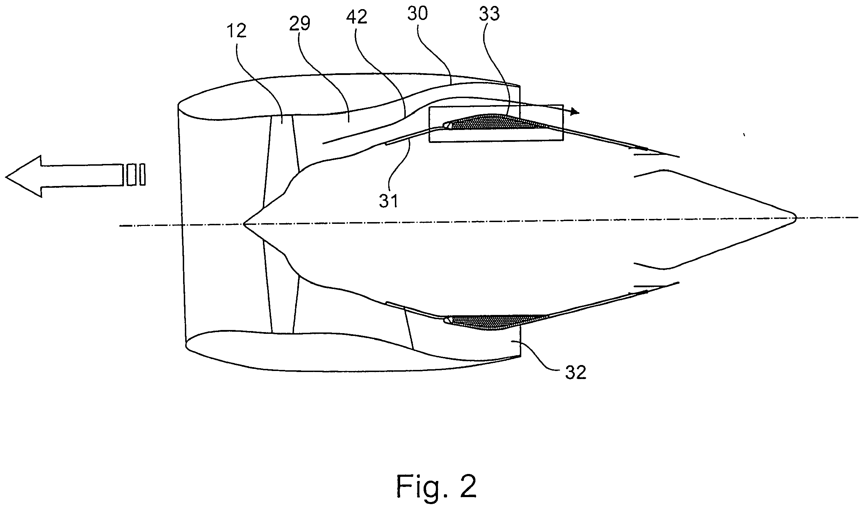

Die Fig. 1 und 2 zeigen weiterhin einen Nebenstromkanal 29, der radial außen durch eine Nebenstromwandung 30, insbesondere einer Triebwerksverkleidung (nacelle) begrenzt wird. Die innere Begrenzung erfolgt durch eine innere Wandung 31. Die Wandungen 30 und 31 bilden eine Nebenstromdüse 32 aus.

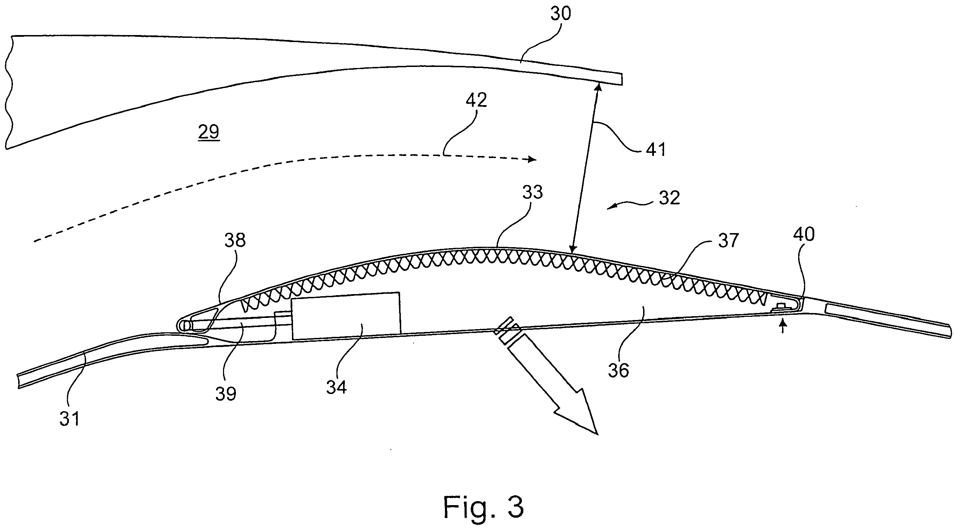

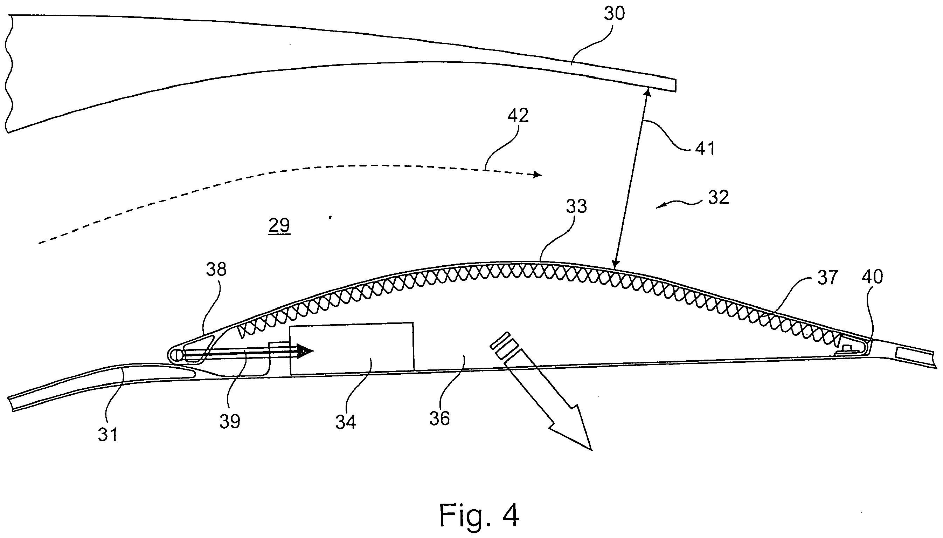

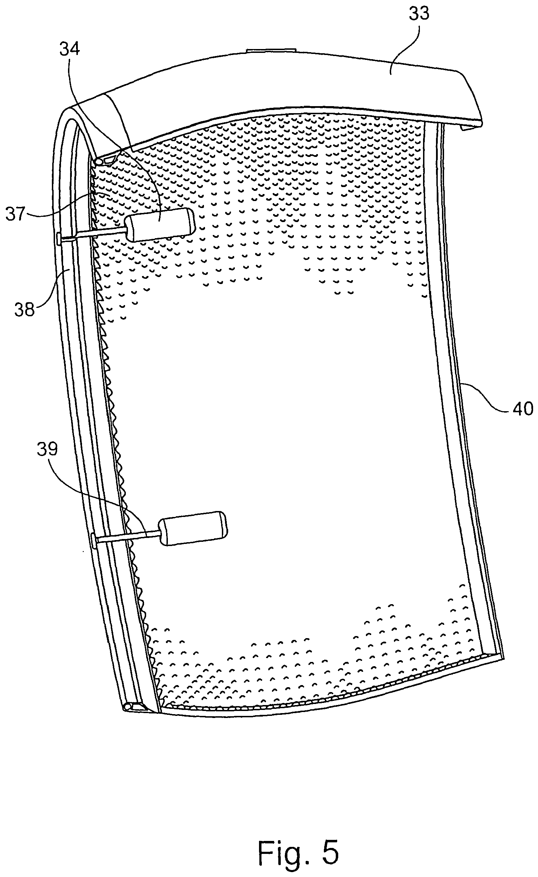

Die Fig. 3 und 4 zeigen im Einzelnen die erfindungsgemäße Ausgestaltung der variablen Nebenstromdüse und zeigen dabei insbesondere ein Verstellelement 33, welches ringförmig und zylinderartig ausgebildet ist (siehe auch Fig. 5). Das Verstellelement 33 umfasst eine metallische äußere Wandung, an deren radialer Innenseite ein Schalldämpfungselement 33 angeordnet ist. Dieses kann als separates Teil oder in Form einer Beschichtung oder Laminierung aufgebracht sein.

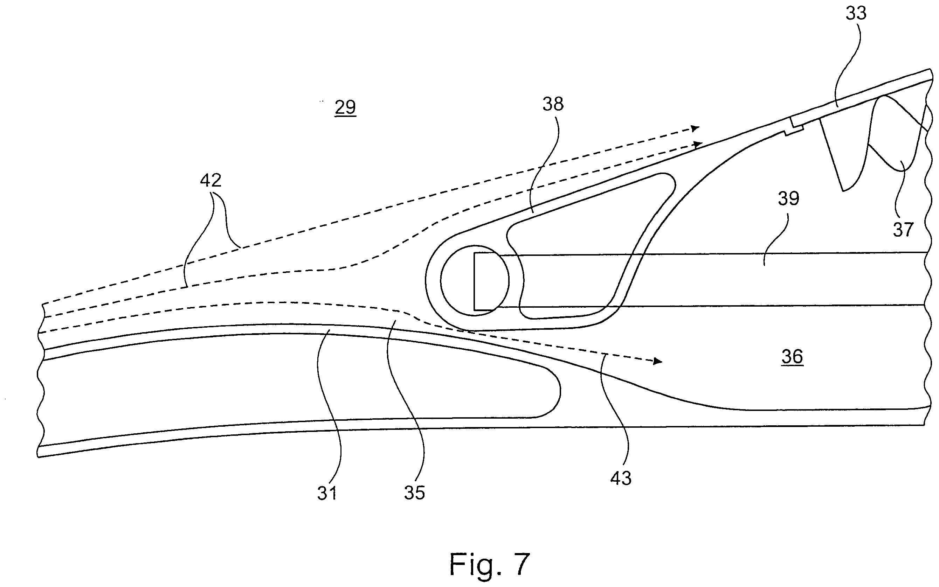

Mittels einer Betätigungsvorrichtung 34, welche beispielsweise als hydraulische Kolben-Zylinder-Einheit ausgebildet ist und einen Zuganker 39 umfasst, kann ein Ringelement 38, mit welchem der jeweilige Zuganker 39 verbunden ist, beispielsweise über einen T-förmigen Haken, in Axialrichtung verschoben werden, so wie dies der Vergleich der Fig. 3 und 4 zeigt. Das Ringelement 38 ist einstückig mit dem Verstellelement 33 ausgebildet, siehe beispielsweise auch Fig. 7.

Der abströmseitige Bereich ist über einen im Querschnitt C-förmigen Haltering 40 gelagert, welcher einstückig oder in Form von einzelnen Ringelementen ausgebildet sein kann und elastisch verformbar ist, um eine elastische Verformung des Verstellelements 33 selbst zu ermöglichen.

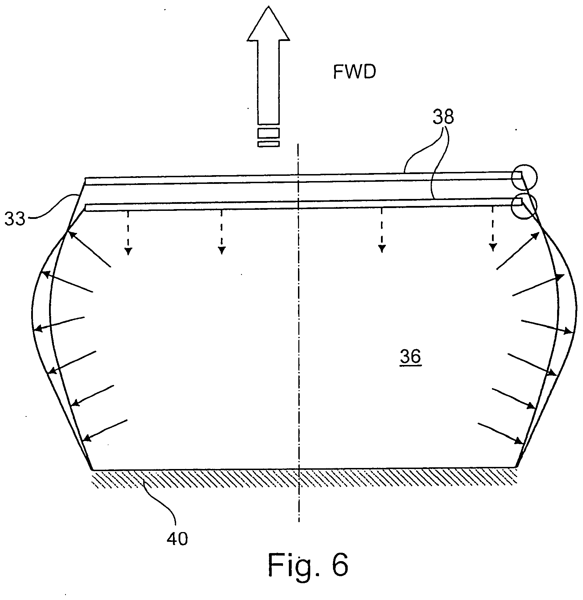

Der Vergleich der Fig. 3 und 4 zeigt, dass ein Nebenstromdüsen-Querschnittsbereich 41 durch ein Aufwölben des Verstellelements 33 veränderbar ist. Die den Nebenstromkanal 29 durchströmende Nebenstromkanalströmung 42 ist in den Fig. 3 und 4 dargestellt. Die Fig. 3 zeigt einen "Normalzustand", bei welchem der minimal in der Nebenstromdüse vorgesehene Querschnittsbereich 41 in üblicher Weise dimensioniert ist. Durch eine Verschiebung des Ringelements 38 in Axialrichtung durch Betätigung der Betätigungsvorrichtung 34 (Fig. 4) ergibt sich eine Verringerung des Querschnittsbereichs 41. Dieser Vorgang ist verdeutlicht in Fig. 6 nochmals dargestellt, dabei ergibt sich insbesondere die ballonartige Aufwölbung des Verstellelements 33.

Die Fig. 7 zeigt den Einströmbereich der erfindungsgemäßen variablen Nebenstromdüse. Dabei ist insbesondere das Ringelement 38 gezeigt. Es ergibt sich, dass zwischen dem Ringelement 38 radial innenliegend eine Lufteinlassöffnung (Luftspalt) 35 ausgebildet ist, durch welche eine Luftströmung 43 in einen innenliegenden Ringraum 36, welcher durch das Verstellelement 33 gebildet wird, einströmen kann, um den oben beschriebenen "Balloneffekt" zu bewirken. Durch eine Axialverschiebung des Ringelements 38 ergibt sich eine anfängliche Wölbung, welche nachfolgend durch den "Balloneffekt" verstärkt wird. Die in dem innenliegenden Ringraum 36 angesammelte Luft führt zu einer positiven Druckdifferenz relativ zu der Nebenstromkanalströmung 42 und verstärkt somit die Verformung des Verstellelements.

Das Ringelement 38 weist eine hohe Stabilität auf, insbesondere gegen eine Verdrehung in Umfangsrichtung, gestattet jedoch die Wölbung des Verstellelements 33. Die Anströmung des Ringelements 38 ist günstig ausgebildet, es ergeben sich keine Rückströmungen oder Vortex-Effekte an der Anströmkante des Ringelements 38.

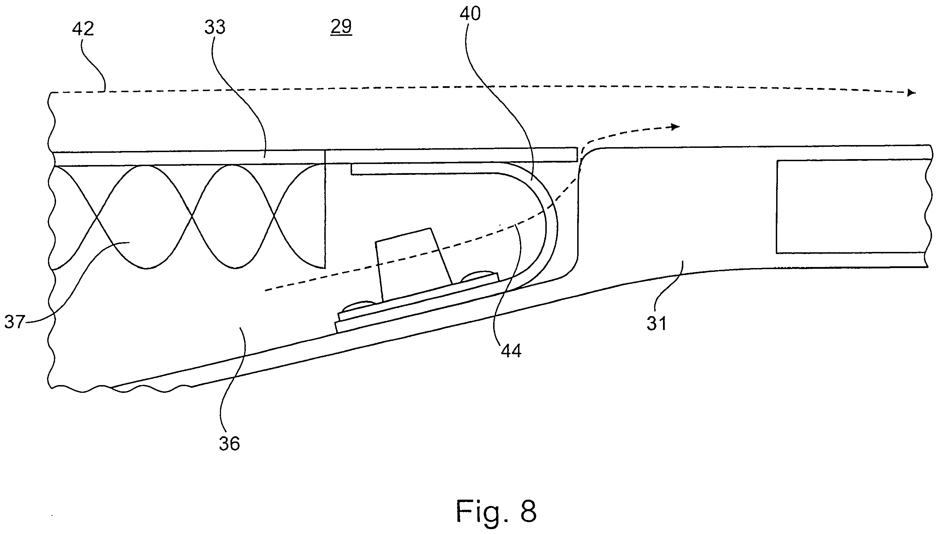

Die Fig. 8 zeigt den stromab angeordneten Bereich des Verstellelements 33, insbesondere den im Querschnitt C-förmigen elastischen Haltering 40. Das Bezugszeichen 44 zeigt eine Luftströmung, welche durch einen rückseitigen Spalt in die Nebenstromkanalströmung 42 ausströmen kann.

### Bezuaszeichenliste:

- 1: Triebwerksachse
- 10: Gasturbinentriebwerk / Kerntriebwerk
- 11: Lufteinlass
- 12: im Gehäuse umlaufender Fan
- 13: Zwischendruckkompressor
- 14: Hochdruckkompressor
- 15: Brennkammern
- 16: Hochdruckturbine
- 17: Zwischendruckturbine
- 18: Niederdruckturbine
- 19: Abgasdüse
- 20: Leitschaufeln
- 21: Triebwerksgehäuse
- 22: Kompressorlaufschaufeln
- 23: Leitschaufeln
- 24: Turbinenschaufeln
- 26: Kompressortrommel oder -scheibe
- 27: Turbinenrotornabe
- 28: Auslasskonus
- 29: Nebenstromkanal
- 30: Nebenstromwandung (nacelle)
- 31: Innere Wandung
- 32: Nebenstromdüse
- 33: Verstellelement
- 34: Betätigungsvorrichtung
- 35: Lufteinlassöffnung (Luftspalt)
- 36: Innenliegender Ringraum
- 37: Schalldämpfungselement
- 38: Ringelement
- 39: Zuganker
- 40: Haltering
- 41: Querschnittsbereich
- 42: Nebenstromkanalströmung
- 43: Luftströmung
- 44: Luftströmung

## Patentansprüche

1. Fluggasturbine mit einem Kerntriebwerk (10), welches von einem Nebenstromkanal (29) umgeben ist, welcher radial außen durch eine Nebenstromwandung (30) umschlossen ist, wobei eine radial innere Wandung (31) des Nebenstromkanals (29) mit der radial äußeren Nebenstromwandung (30) eine Nebenstromdüse (32) bildet, wobei die radial innere Wand (31) ein sich um den Umfang der inneren Wandung (31) erstreckendes Verstellelement (33) umfasst, welches radial nach außen verformbar ist, **dadurch gekennzeichnet, dass** das Verstellelement (33) an seinem stromauf angeordneten Bereich mit zumindest einer Lufteinlassöffnung (35) versehen ist, durch welche Luft aus dem Nebenstromkanal (29) in einen innen liegenden Ringraum (36) des Verstellelements (33) einleitbar ist.

2. Fluggasturbine nach Anspruch 1, **dadurch gekennzeichnet, dass** das Verstellelement (33) elastisch ausgebildet ist.

3. Fluggasturbine nach Anspruch 1 oder 2, **dadurch gekennzeichnet, dass** das Verstellelement (33) an seinem stromauf angeordneten Bereich in Axialrichtung verschiebbar ist.

4. Fluggasturbine nach Anspruch 3, **dadurch gekennzeichnet, dass** das Verstellelement (33) an seinem stromauf angeordneten Bereich mittels einer Betätigungsvorrichtung (34) verschiebbar ist.

5. Fluggasturbine nach einem der Ansprüche 1 bis 4, **dadurch gekennzeichnet, dass** das Verstellelement (33) an seiner dem Nebenstromkanal (29) zugewandten Seite und/oder an seiner dem Ringraum (36) zugewandten Seite mit einem Schalldämpfungselement (37) versehen ist.

6. Fluggasturbine nach einem der Ansprüche 1 bis 5, **dadurch gekennzeichnet, dass** das Verstellelement (33) als separates Bauteil auf der radialen Außenseite der inneren Wandung (31) des Nebenstromkanals (29) angeordnet ist.

7. Fluggasturbine nach einem der Ansprüche 4 bis 6, **dadurch gekennzeichnet, dass** das Verstellelement (33) auf seinem stromauf angeordneten Endbereich ein starres Ringelement (38) umfasst, welches mit der Betätigungsvorrichtung (34) gekoppelt ist, bevorzugt mittels zumindest eines Zugankers (39), und welches in Axialrichtung verschiebbar ist.

## Claims

1. Aircraft gas turbine with a core engine (10) which is surrounded by a bypass duct (29) enclosed radially outwards by a bypass wall (30), with a radially inner wall (31) of the bypass duct (29) forming with the radially outer bypass wall (30) a bypass nozzle (32), wherein the radially inner wall (31) includes an adjusting element (33) extending along the circumference of the inner wall (31) and being deformable radially outwards, **characterized in that** the adjusting element (33) is provided at its upstream area with at least one air inlet opening (35) through which air from the bypass duct (29) can be introduced into an internal annular space (36) of the adjusting element (33).

2. Aircraft gas turbine in accordance with Claim 1, **characterized in that** the adjusting element (33) is designed elastic.

3. Aircraft gas turbine in accordance with Claim 1 or 2, **characterized in that** the adjusting element (33) is moveable in the axial direction at its upstream area.

4. Aircraft gas turbine in accordance with Claim 3, **characterized in that** the adjusting element (33) is moveable by means of an actuating device (34) at its upstream area.

5. Aircraft gas turbine in accordance with one of the Claims 1 to 4, **characterized in that** the adjusting element (33) is provided with a sound absorbing element (37) at its side facing the bypass duct (29) and/ or its side facing the annular space (36).

6. Aircraft gas turbine in accordance with one of the Claims 1 to 5, **characterized in that** the adjusting element (33) is arranged as a separate component on the radially outer side of the inner wall (31) of the bypass duct (29).

7. Aircraft gas turbine in accordance with one of the Claims 4 to 6, **characterized in that** the adjusting element (33) at its upstream end area includes a rigid ring element (38) which is linked to the actuating device (34), preferably by means of at least one tie rod (39) and which is moveable in the axial direction.

## Revendications

1. Turbine à gaz aéronautique avec un moteur de base (10) entouré d'un canal de flux secondaire (29) qui est cerné radialement à l'extérieur par une paroi de flux secondaire (30), sachant qu'une paroi radialement intérieure (31) du canal de flux secondaire (29) forme une tuyère de flux secondaire (32) avec la paroi de flux secondaire radialement extérieure (30), sachant que la paroi radialement intérieure (31) comprend un élément d'ajustage (33) s'étendant autour de la circonférence de la paroi intérieure (31) et étant déformable radialement vers l'extérieur, **caractérisée en ce que** l'élément d'ajustage (33) est pourvu, sur sa zone disposée en amont, d'au moins une ouverture d'admission d'air (35) à travers laquelle de l'air provenant du canal de flux secondaire (29) peut être introduit dans un espace annulaire (36) situé à l'intérieur de l'élément d'ajustage (33).

2. Turbine à gaz aéronautique selon la revendication n° 1, **caractérisée en ce que** l'élément d'ajustage (33) est conçu de façon élastique.

3. Turbine à gaz aéronautique selon la revendication n° 1 ou n° 2, **caractérisée en ce que** l'élément d'ajustage (33) est déplaçable, sur sa zone disposée en amont, dans le sens axial.

4. Turbine à gaz aéronautique selon la revendication n° 3, **caractérisée en ce que** l'élément d'ajustage (33) est déplaçable, sur sa zone disposée en amont, au moyen d'un dispositif d'actionnement (34).

5. Turbine à gaz aéronautique selon une des revendications n° 1 à n° 4, **caractérisée en ce que** l'élément d'ajustage (33) est pourvu, sur son côté tourné vers le canal de flux secondaire (29) et/ ou sur son côté tourné vers l'espace annulaire (36), d'un élément amortissant le bruit (37).

6. Turbine à gaz aéronautique selon une des revendications n° 1 à n° 5, **caractérisée en ce que** l'élément d'ajustage (33) est disposé sous forme de composant séparé sur le côté radialement extérieur de la paroi intérieure (31) du canal de flux secondaire (29).

7. Turbine à gaz aéronautique selon une des revendications n° 4 à n° 6, **caractérisée en ce que** l'élément d'ajustage (33) comprend sur son extrémité disposée en amont un élément annulaire rigide (38) qui est accouplé au dispositif d'actionnement (34), de préférence au moyen d'au moins un tirant (39) et qui est déplaçable dans le sens axial.
